# EUROPÄISCHE PATENTSCHRIFT

(11) **EP 3 919 332 B1**
(45) Veröffentlichungstag und Bekanntmachung des Hinweises auf die Patenterteilung: **17.05.2023**
(21) Anmeldenummer: 21163112.2
(22) Anmeldetag: 17.03.2021
(51) Int. Cl.: B60T 7/12, B60T 8/1755

(54) **VERFAHREN UND VORRICHTUNG ZUM BETREIBEN EINES KRAFTFAHRZEUGS**
METHOD AND DEVICE FOR OPERATING A VEHICLE
PROCÉDÉ ET DISPOSITIF DE FONCTIONNEMENT D'UN VÉHICULE AUTOMOBILE

(30) Priorität: 02.06.2020 DE 102020206827
(43) Veröffentlichungstag der Anmeldung: 08.12.2021
(73) Patentinhaber: Robert Bosch GmbH, 70442 Stuttgart (DE)
(72) Erfinder: Freienstein, Heiko, 71263 Weil Der Stadt (DE); Wieland, Jochen, 71272 Renningen (DE)

(56) Entgegenhaltungen:
- CN-A- 109 606 370
- DE-A1-102011 106 808
- DE-A1-102016 115 071
- US-A1- 2020 130 662

## Beschreibung

Die Erfindung betrifft ein Verfahren und eine Vorrichtung zum Betreiben eines Kraftfahrzeugs, wobei eine Geschwindigkeit des Kraftfahrzeugs durch ein Abstandsregelsystem in Abhängigkeit von einer Soll-Entfernung des Kraftfahrzeugs zu einem direkt vorausfahrenden Verkehrsteilnehmer eingestellt wird, wobei zum Einhalten der vorgegebenen Soll-Entfernung die Geschwindigkeit bei Unterschreitung der Soll-Entfernung durch einen durch das Abstandsregelsystem durchgeführten Bremsvorgang reduziert wird, und wobei zum Einhalten einer vorgegebenen Notfallentfernung zu dem direkt vorausfahrenden Verkehrsteilnehmer, die kürzer ist als die Soll-Entfernung, durch ein Notfallbremssystem die Geschwindigkeit durch einen Notbremsvorgang reduziert wird, wobei der Notbremsvorgang eine höhere Verzögerung des Kraftfahrzeugs bewirkt als der Bremsvorgang.

Weiterhin betrifft die Erfindung ein Kraftfahrzeug, das zumindest ein ansteuerbares Bremssystem aufweist, sowie ein Abstandsregelsystem und ein Notbremssystem, die beide dazu ausgebildet sind, das Bremssystem automatisiert anzusteuern, wobei das Kraftfahrzeug außerdem die oben genannte Vorrichtung aufweist.

### Stand der Technik

Verfahren und Vorrichtungen der eingangs genannten Art sind aus dem Stand der Technik bekannt. Fahrerassistenzsysteme in Kraftfahrzeugen dienen dazu, insbesondere die Fahrsicherheit eines Kraftfahrzeugs zu erhöhen. Bekannte Geschwindigkeitsregelsysteme, wie das Abstandsregelsystem ACC (automatic cruise control) oder ein Notbremssystem, wie das AEB-System (AEB = automatic emergency brake) werden in Kraftfahrzeugen dazu eingesetzt, Auffahrunfälle zu verhindern und einen Sicherheitsabstand zum vorausfahrenden Fahrzeug einzuhalten. Derartige Systeme werden sowohl bei Personenkraftwagen oder Lastkraftwagen als auch bei Zweirädern beziehungsweise Motorrädern eingesetzt, wobei insbesondere bei letzterem die Beherrschbarkeit des Kraftfahrzeugs einerseits und der Fahrspaß andererseits zu einem Zielkonflikt bei der Einstellung der oben genannten Assistenzsysteme führen kann. Das Abstandsregelsystem stellt üblicherweise durch einen Bremsvorgang mit einer geringen Verzögerung oder mit einem Beschleunigungsvorgang sicher, dass eine gewünschte Soll-Entfernung zwischen dem eigenen Kraftfahrzeug und dem weiteren Verkehrsteilnehmer eingehalten wird. Durch das Notbremssystem wird gewährleistet, dass ein Auffahrunfall bei beispielsweise einem plötzlichen Bremsvorgang mit höherer Verzögerung des vorausfahrenden Verkehrsteilnehmers vermieden wird. Das Notbremssystem wird aktiviert, wenn die Ist-Entfernung eine Notfallentfernung, die kleiner ist als die Soll-Entfernung, unterschreitet.

Ferner ist aus der CN 109 606 370 A ein Verfahren zum Betreiben eines Kraftfahrzeugs bekannt, wobei eine Geschwindigkeit des Kraftfahrzeugs in Abhängigkeit von einer Soll-Entfernung des Kraftfahrzeugs zu einem direkt vorausfahrenden Verkehrsteilnehmer eingestellt wird und zum Einhalten der vorgegebenen Soll-Entfernung die Geschwindigkeit bei Unterschreiten der Soll-Entfernung reduziert wird, und wobei zum Einhalten einer vorgegebenen Notfallentfernung zu dem vorausfahrenden Verkehrsteilnehmer die Geschwindigkeit durch einen Notbremsvorgang mit einer entsprechend höheren Verzögerung reduziert wird.

### Offenbarung der Erfindung

Das erfindungsgemäße Verfahren mit den Merkmalen des Anspruchs 1 hat den Vorteil, dass die Assistenzsysteme an den Fahrstil eines Fahrers des Kraftfahrzeugs angepasst werden oder anpassbar sind, sodass dem Fahrer beispielsweise trotz Gewährleistung der Fahrsicherheit ein hoher Fahrspaß gewährleistet werden kann. Das erfindungsgemäße Verfahren sieht dazu vor, dass die Notfallentfernung in Abhängigkeit von einem durch den Fahrer des Kraftfahrzeugs auswählbaren Fahrmodus vorgegeben wird. Der Fahrer kann somit selbst entscheiden, ab welchem Zeitpunkt die Notfallbremsung erfolgt. Dabei wird unabhängig von dem vorgewählten Fahrmodus sichergestellt, dass ein Aufprall auf dem vorausfahrenden Fahrzeug durch die Notfallbremsung beziehungsweise den Notbremsvorgang in jedem Fall verhindert wird. Insbesondere werden durch die Fahrmodi unterschiedliche Notfallentfernungen dem Fahrer zur Verfügung gestellt, aus welchen er wählen kann. Dadurch wird es dem Fahrer beispielsweise ermöglicht, eine besonders sportliche Fahrweise ohne frühzeitige oder vorzeitige Assistenzsystemeingriffe in den Fahrbetrieb vorzunehmen oder sicherheitsbewusst mit frühzeitigen Eingriffen der Assistenzsysteme das Kraftfahrzeug zu führen.

Insbesondere wird die Verzögerung des Notbremsvorgangs in Abhängigkeit von dem ausgewählten Fahrmodus vorgegeben. Damit unterscheiden sich die Verzögerungen der Fahrmodi im Fall einer Notbremsung voneinander. Dadurch wird insbesondere erreicht, dass eine ausreichende Notfallentfernung jederzeit gewährleistet werden kann. Darüber hinaus wird dabei dem Fahrempfinden des Fahrers weiter entgegengekommen, um einen sportlicheren Assistenzmodus oder einen sichereren Assistenzmodus zu ermöglichen.

Besonders bevorzugt wird die Verzögerung mit abnehmender Notentfernung erhöht, um einen Aufprall auf dem vorausfahrenden Fahrzeug auch bei einer kurzen Notfallentfernung noch zu verhindern. Optional wird die kürzeste Notfallentfernung derart gewählt, dass wenn eine Kollision mit dem vorausfahrenden Fahrzeug unvermeidlich ist, Verletzungen oder Aufprallgeschwindigkeit minimiert sind. Hierdurch wird das Risiko von Verletzungen minimiert, selbst wenn eine Kollision nicht mehr vermieden werden kann. Derartige Situationen können beispielsweise auftreten, wenn das vorausfahrende Fahrzeug selbst in einen Unfall verwickelt ist und unerwartet schnell verzögert.

Vorliegend werden dem Fahrer des Kraftfahrzeugs zumindest zwei Fahrmodi zur Auswahl bereitgestellt und zwar ein defensiver Fahrmodus mit einer ersten Notfallentfernung und ein offensiver Fahrmodus mit einer zweiten Notfallentfernung, wobei die zweite Notfallentfernung kleiner ist als die erste. Dadurch kann der Fahrer selbst einstellen, zu welchem Zeitpunkt beziehungsweise Abstand das Notfallbremssystem aktiviert wird beziehungsweise in den Fahrbetrieb eingreift.

Weiterhin ist bevorzugt vorgesehen, dass ein Fahrerprofil des Fahrers des Kraftfahrzeugs im Fahrbetrieb ermittelt und bei Bestimmung der Notfallentfernung berücksichtigt wird. Es erfolgt hierbei also ein automatisches Erlernen beziehungsweise Erkennen des Fahrerprofils eines Fahrers des Kraftfahrzeugs. Dies kann beispielsweise mithilfe von Geschwindigkeits-, Beschleunigungs-, Verzögerungs- und Neigungsdaten des Kraftfahrzeugs, insbesondere des Zweirads, erfolgen, die vorzugsweise kategorisiert werden, um ein Fahrerprofil aus aktuellen Daten/Fahrdaten zu ermitteln.

Besonders bevorzugt wird eine optimierte Notfallentfernung oder Notfallverzögerung durch ein maschinelles Lernverfahren, vorzugsweise in Abhängigkeit eines erkannten Fahrerprofils, ermittelt. Dazu wird besonders bevorzugt in einem vorhergehenden Schritt ein maschinelles Lernsystem mit Trainingsdaten, die sich aus den oben genannten Fahrdaten ergeben, angelernt, um vorteilhafte Notfallentfernungen oder Notfallverzögerungen zu bestimmen, die später in Abhängigkeit von den erkannten Fahrdaten im Fahrbetrieb des Kraftfahrzeugs eingesetzt werden.

Für das maschinelle Lernverfahren werden insbesondere Trainingsdaten eingesetzt, die insbesondere Fahrdynamikdaten des Kraftfahrzeugs, insbesondere Beschleunigung, Geschwindigkeit, Neigungswinkel, Lenkwinkel und/oder Schräglaufwinkel, und/oder Umfelddaten umfassen, insbesondere Entfernungsdaten, Geländedaten, Positionsdaten und/oder Wetterdaten.

Die erfindungsgemäße Vorrichtung mit den Merkmalen des Anspruchs 7 zeichnet sich dadurch aus, dass das Steuergerät speziell dazu hergerichtet ist, bei bestimmungsgemäßem Gebrauch das erfindungsgemäße Verfahren, wie es vorstehend beschrieben wurde, auszuführen. Es ergeben sich hierdurch die bereits genannten Vorteile.

Das erfindungsgemäße Kraftfahrzeug mit den Merkmalen des Anspruchs 8 zeichnet sich durch die erfindungsgemäße Vorrichtung aus. Es ergeben sich die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden.

Dazu zeigen
- Figur 1: eine beispielhafte Verkehrssituation in einer Draufsicht,
- Figur 2: ein Flussdiagramm zur Erläuterung eines vorteilhaften Verfahrens zum Betreiben eines Kraftfahrzeugs und
- Figur 3: ein Diagramm zur Erläuterung des Verfahrens.

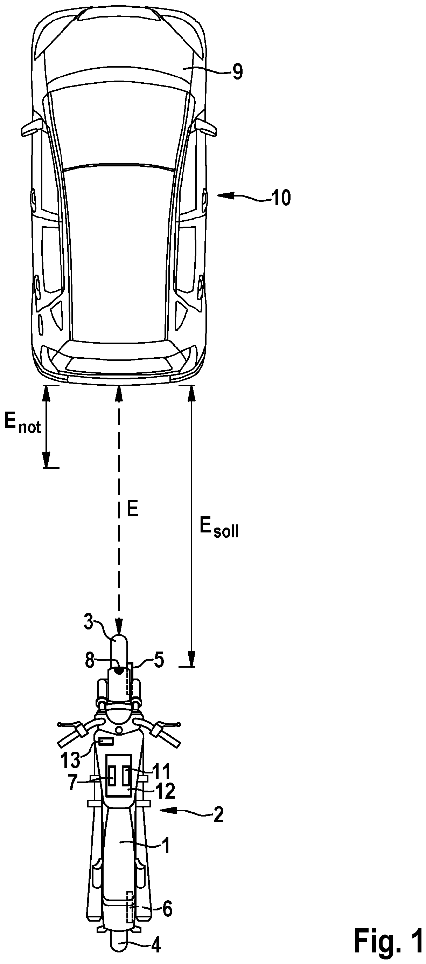

Figur 1 zeigt in einer vereinfachten Darstellung eine Draufsicht auf eine beispielhafte Verkehrssituation. Gezeigt ist ein erstes Kraftfahrzeug 1, das vorliegend als motorangetriebenes Zweirad beziehungsweise als Motorrad ausgebildet ist. Das Kraftfahrzeug 1 weist eine hier nicht dargestellte Antriebseinrichtung, beispielsweise ein Elektromotor oder Verbrennungsmotor auf, sowie ein Bremssystem 2, das beispielsweise den Rädern 3, 4 des Kraftfahrzeugs 1 zugeordnete Reibbremsen 5, 6 aufweist, die elektrisch, hydraulisch und/oder mechanisch ansteuerbar sind. Weiterhin weist das Kraftfahrzeug 1 ein Abstandregelsystem 7 auf, das zumindest einen Abstandssensor 8 aufweist, der am vorderen Ende des Kraftfahrzeugs 1 angeordnet und in Vorwärtsfahrtrichtung ausgerichtet ist, um eine Entfernung E zu einem direkt vorausfahrenden Verkehrsteilnehmer 9, der beispielsweise ein Personenkraftfahrzeug 10 ist, laufend zu überwachen. Der Sensor 8 ist beispielsweise als Radarsensor, Ultraschallsensor oder Lidarsensor ausgebildet. Das Abstandsregelsystem 7 ist dazu ausgebildet, in Abhängigkeit von der erfassten Entfernung E eine Geschwindigkeit des Kraftfahrzeugs 1 derart einzustellen, dass die Entfernung E einer insbesondere geschwindigkeitsabhängigen Soll-Entfernung Eₛₒₗₗ entspricht. Dazu ist das Abstandsregelsystem 7 dazu ausgebildet, das Bremssystem 2 bei Bedarf anzusteuern, um die Geschwindigkeit des Kraftfahrzeugs 1 bei Bedarf zu reduzieren. Auch ist das Abstandsregelsystem 7 dazu ausgebildet, die Antriebseinrichtung des Kraftfahrzeugs 1 anzusteuern, um die Geschwindigkeit zu erhöhen, um die Soll-Entfernung zu gewährleisten.

Weiterhin weist das Kraftfahrzeug 1 ein Notfallbremssystem 11 auf, das ebenfalls dazu ausgebildet ist, die Bremseinrichtung 2 des Kraftfahrzeugs 1 bei Bedarf anzusteuern. Das Notfallbremssystem 11 unterscheidet sich von dem Abstandsregelsystem 7 dadurch, dass es eine höhere Verzögerung beziehungsweise höhere Bremskräfte als das Abstandsregelsystem 7 einstellt und später als das Abstandsregelsystem 7 reagiert, wenn eine Notfallentfernung Eₙₒₜ, die kleiner ist als die Soll-Entfernung Eₛₒₗₗ, durch das Kraftfahrzeug 1 unterschritten wird. Um einen Aufprall auf das Kraftfahrzeug 10 zu vermeiden oder die Aufprallgeschwindigkeit zu minimieren, steuert das Notfallbremssystem 11 das Bremssystem 2 dazu an, das Kraftfahrzeug 1 stark zu verzögern, während das Abstandsregelsystem 7 das Bremssystem 2 dazu ansteuert, das Kraftfahrzeug 1 nur leicht beziehungsweise sanft zu verzögern, um den Fahrkomfort nicht zu beeinträchtigen.

Optional sind das Abstandsregelsystem 7 und das Notfallbremssystem 11 in ein Steuergerät 12 des Kraftfahrzeugs 1 integriert. Das Kraftfahrzeug 1 weist weiterhin eine Eingabeschnittstelle 13 für einen Fahrer des Kraftfahrzeugs 1, mithilfe welcher der Fahrer zwischen unterschiedlichen Fahrmodi des Kraftfahrzeugs 1 wählen kann. Insbesondere dient die Eingabeschnittstelle 13 dazu, dem Fahrer die Auswahl zwischen einem offensiven, sportlichen Fahrmodus und einem defensiven, komfortablen Fahrmodus zu wählen. Die Eingabeschnittstelle 13 ist dazu beispielsweise ein mechanisch betätigbarer Schalter, ein berührungsempfindliches Schaltelement, insbesondere ein berührungsempfindliches Display, ein Spracheingabemodul oder ähnliches. Das Steuergerät 12 beeinflusst die Parameter des Notfallbremssystems 11 derart, dass in Abhängigkeit von dem gewählten Fahrmodus die Notfallentfernung Eₙₒₜ sowie das Notfall-Bremsmoment beziehungsweise Verzögerungsmoment verändert werden.

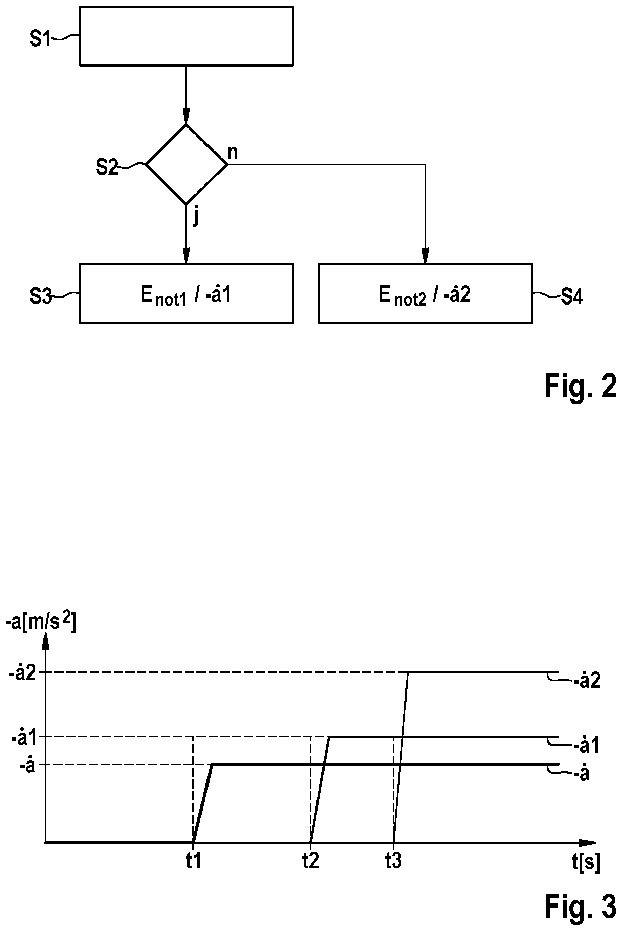

Dazu wird insbesondere das in Figur 2 anhand eines Flussdiagramms gezeigte Verfahren durchgeführt. Das Verfahren beginnt in einem Schritt S1, in welchem das Kraftfahrzeug in Betrieb genommen wird. In einem darauffolgenden Schritt S2 prüft das Steuergerät 12, ob das Abstandsregelsystem 7 aktiviert oder deaktiviert ist. Zum Aktivieren und Deaktivieren weist das Kraftfahrzeug 1 beispielsweise die für den Fahrer zugängige Eingabeschnittstelle 13 auf.

Ergibt die Abfrage von Schritt S2, dass das Abstandsregelsystem 1 aktiviert ist (j), so wählt es eine erste Notfallentfernung Eₙₒₜ₁ aus, bei deren Unterschreitung durch das Kraftfahrzeug 1 das Bremssystem 2 zum Verzögern des Kraftfahrzeugs 1 mit einer vorgegebenen Notfallverzögerung -ȧ1 verzögert wird.

Ergibt die Abfrage in Schritt S2 jedoch, dass das Abstandsregelsystem 7 deaktiviert wurde (n), so stellt das Steuergerät 12 eine zweite Notfallentfernung Eₙₒₜ₂ ein, die kleiner ist als die erste Notfallentfernung Eₙₒₜ₁, sowie eine zweite Notfallverzögerung -ä2, die größer ist als die Notfallverzögerung -ȧ1.

Figur 3 veranschaulicht die unterschiedlichen Parameter anhand eines Diagramms, das die eingestellte Verzögerung über die Zeit t zeigt. Gezeigt sind dabei Beschleunigungsverläufe ausgehend von der gleichen Verkehrssituation. Aufgrund der verhältnismäßig großen Soll-Entfernung Eₛₒₗₗ beginnt die normale Verzögerung -ä zu einem frühen Zeitpunkt t1. Ist das Abstandsregelsystem 7 aktiviert, so beginnt die Verzögerung -ȧ1 zu einem späteren Zeitpunkt t2, der eine geringeren Entfernung beziehungsweise der ersten Notfallentfernung Eₙₒₜ₁ zu dem vorausfahrenden Kraftfahrzeug 9 entspricht. Dieser Fall tritt beispielsweise dann auf, wenn der Fahrer das Kraftfahrzeug manuell beschleunigt, das Abstandsregelsystem 7 also umgeht, oder wenn der vorausfahrende Verkehrsteilnehmer stärker verzögert als das Abstandsregelsystem reagieren oder das Kraftfahrzeug 1 verzögern kann. Die Verzögerung -ȧ1 ist dabei höher, beispielsweise 6 m/s², als die Normalverzögerung -ä, beispielsweise 4 m/s². Zu einem späteren Zeitpunkt t3 setzt die Notfallverzögerung -ä2 ab Unterschreiten der Notfallentfernung Eₙₒₜ₂ ein. Die Notfallverzögerung -ä2 ist dabei noch höher als die Notfallverzögerung -ȧ1 gewählt, sodass das Kraftfahrzeug 1 nach Überschreiten der kürzeren Notfallentfernung Eₙₒₜ₂ noch stärker verzögert, beispielsweise mit 9 m/s².

Das beschriebene Verfahren hat den Vorteil, dass durch die Aktivierung des Abstandsregelsystems der Wunsch des Fahrers nach hohem Komfort und hoher Sicherheit angenommen wird. Durch die bewusste Aktivierung des Abstandsregelsystems 7 nimmt der Fahrer bewusst in Kauf, dass das Kraftfahrzeug 1, je nach Geschwindigkeit und Abstand zum vorausfahrenden Verkehrsteilnehmer, eigenständig Bremseingriffe zur Längsregelung tätigt. Insbesondere ist der Fahrer damit auf frühzeitige Eingriffe auch des Notfallbremssystems 11 vorbereitet, die seinen defensiven sicherheitsbewussten Fahrstil in potentiellen Gefahrensituationen optimal unterstützen.

Deaktiviert der Fahrer das Abstandsregelsystem jedoch, so kann davon ausgegangen werden, dass der Fahrer eher an einer sportlichen und offensiveren Fahrweise interessiert ist, mit dem Ausreizen physikalischer Grenzen des Kraftfahrzeugs, häufigen Überholvorgängen und dichtem Auffahren oder dichterem Auffahren an den vorherfahrenden Verkehrsteilnehmer. Das Steuergerät 12 und das durch das Steuergerät 12 durchgeführte Verfahren geben somit dem Fahrer die Möglichkeit, automatisierte, Eingriffe in das Bremssystem an seinen Fahrstil auf einfache Art und Weise anzupassen. Optional ist das Steuergerät 12 außerdem dazu ausgebildet, ein Fahrprofil des Fahrers zu erkennen, beispielsweise in Abhängigkeit von aktuellen Fahrdynamikdaten, wie Geschwindigkeitsdaten, Neigungswinkel des Motorrads in Kurven oder dergleichen, um einen sportlichen oder defensiven Fahrstil zu erkennen. Die Parametrisierung des Bremssystems beziehungsweise des Notbremssystems 11 wird dabei insbesondere in Abhängigkeit des erkannten Fahrertyps verändert beziehungsweise angepasst.

Optional wird darüber hinaus die Parametrisierung des Notfallbremssystems 11 in Kombination mithilfe von maschinellen Lernverfahren optimiert. Denkbar ist es, Eingriffszeitpunkt und -stärke des Notfallbremssystems 11 in Abhängigkeit von gelernten und beispielsweise manuell gelabelten/kategorisierten Daten vorzunehmen. Als Daten kommen hierbei insbesondere in Frage: Fahrdynamik-Daten des Kraftfahrzeugs, wie beispielsweise Geschwindigkeit, Beschleunigung, Neigungswinkel, Lenkwinkel und/oder Schräglaufwinkel, sowie Umfeld-Sensordaten eines Sensors, beispielsweise Radarsensor, Videosensor, Lidarsensor und/oder Ultraschallsensor.

Während gemäß dem vorliegenden Ausführungsbeispiel das Kraftfahrzeug 1 als Zweirad beziehungsweise als Motorrad ausgebildet ist, können die Vorrichtung 12 sowie das beschriebene Verfahren selbstverständlich auch bei einem Personenkraftwagen oder Lastkraftwagen eingesetzt werden.

## Patentansprüche

1. Verfahren zum Betreiben eines Kraftfahrzeugs (1), wobei eine Geschwindigkeit des Kraftfahrzeugs (1) durch ein Abstandsregelsystem (7) in Abhängigkeit von einer Soll-Entfernung (Eₛₒₗₗ) des Kraftfahrzeugs (1) zu einem direkt vorausfahrenden Verkehrsteilnehmer (9) eingestellt wird, wobei zum Einhalten der vorgegebenen Soll-Entfernung (Eₛₒₗₗ) die Geschwindigkeit bei Unterschreiten der Soll-Entfernung (Eₛₒₗₗ) durch einen durch das Abstandsregelsystem (7) durchgeführten Bremsvorgang reduziert wird, wobei zum Einhalten einer vorgegebenen Notfallentfernung (Eₙₒₜ) zu dem vorausfahrenden Verkehrsteilnehmer (9) durch ein Notfallbremssystem (11) die Geschwindigkeit durch einen Notbremsvorgang reduziert wird, wobei der Notbremsvorgang eine höhere Verzögerung (-ȧ1/-ȧ2) des Kraftfahrzeugs (1) bewirkt als der Bremsvorgang, wobei die Notfall-Entfernung (Eₙₒₜ) in Abhängigkeit von einem durch den Fahrer des Kraftfahrzeugs (1) auswählbaren Fahrmodus vorgegeben wird, wobei dem Fahrer des Kraftfahrzeugs (1) zumindest zwei Fahrmodi zur Auswahl bereitgestellt werden und zwar ein defensiver Fahrmodus mit einer ersten Notfallentfernung (Eₙₒₜ₁) und ein offensiver Fahrmodus mit einer zweiten Notfallentfernung (Eₙₒₜ₂), und wobei die zweite Notfallentfernung (Eₙₒₜ₂) kleiner ist als die erste, **dadurch gekennzeichnet, dass** der defensive Fahrmodus eingestellt wird, wenn das Abstandsregelsystem aktiviert wird, und der offensive Fahrmodus, wenn das Abstandsregelsystem deaktiviert wird.

2. Verfahren nach Anspruch 1, **dadurch gekennzeichnet, dass** die Verzögerung (-ȧ1/-ȧ2) des Notbremsvorgangs in Abhängigkeit von dem auswählbaren Fahrmodus vorgegeben wird.

3. Verfahren nach einem der vorhergehenden Ansprüche, **dadurch gekennzeichnet, dass** die Verzögerung (-ȧ1/-ȧ2) mit abnehmender Notfallentfernung (Eₙₒₜ) erhöht wird.

4. Verfahren nach einem der vorhergehenden Ansprüche, **dadurch gekennzeichnet, dass** ein Fahrerprofil eines Fahrers des Kraftfahrzeugs (1) im Fahrerbetrieb ermittelt und bei der Bestimmung der Notfallentfernung (Eₙₒₜ) berücksichtigt wird.

5. Verfahren nach einem der vorhergehenden Ansprüche, **dadurch gekennzeichnet, dass** die Notfallentfernung (Eₙₒₜ) und/oder Notfallverzögerung (-ȧ1/-ȧ2) durch ein maschinelles Lernverfahren optimiert werden.

6. Verfahren nach Anspruch 5, **dadurch gekennzeichnet, dass** für das maschinelle Lernverfahren Trainingsdaten eingesetzt werden, die insbesondere Fahrdynamik-Daten des Kraftfahrzeugs (1) und/oder Umfelddaten des Kraftfahrzeugs (1) umfassen.

7. Vorrichtung zum Betreiben eines Kraftfahrzeugs (1), insbesondere Motorrad oder Kraftwagen, wobei das Kraftfahrzeug (1) zumindest ein ansteuerbares Bremssystem (2) aufweist, sowie ein Abstandsregelsystem (7) und ein Notbremssystem (11), die beide dazu ausgebildet sind, das Bremssystem (2) automatisiert anzusteuern, wobei die Vorrichtung als Steuergerät (12) ausgebildet ist, **dadurch gekennzeichnet, dass** das Steuergerät (12) speziell dazu hergerichtet ist, bei bestimmungsgemäßem Gebrauch das Verfahren gemäß einem der Ansprüche 1 bis 6 auszuführen.

8. Kraftfahrzeug (1) mit einer Vorrichtung nach Anspruch 7.

## Claims

1. Method for operating a motor vehicle (1), wherein a speed of the motor vehicle (1) is set by a distance control system (7) depending on an intended distance (Eₛₒₗₗ) of the motor vehicle (1) from a road user (9) travelling directly in front, wherein, in order to maintain the prescribed intended distance (Eₛₒₗₗ), the speed is reduced by means of a braking process carried out by the distance control system (7) when the intended distance (Eₛₒₗₗ) is undershot, wherein, in order to maintain a prescribed emergency distance (Eₙₒₜ) from the road user (9) travelling in front, the speed is reduced by an emergency brake system (11) by means of an emergency braking process, wherein the emergency braking process produces greater deceleration (-ȧ1/-ȧ2) of the motor vehicle (1) than the braking process, wherein the emergency distance (Eₙₒₜ) is prescribed depending on a driving mode selectable by the driver of the motor vehicle (1), wherein the driver of the motor vehicle (1) is provided with a choice of at least two driving modes, specifically a defensive driving mode with a first emergency distance (Eₙₒₜ₁) and an offensive driving mode with a second emergency distance (Eₙₒₜ₂), and wherein the second emergency distance (Eₙₒₜ₂) is smaller than the first, **characterized in that** the defensive driving mode is set if the distance control system is activated and the offensive driving mode is set if the distance control system is deactivated.

2. Method according to Claim 1, **characterized in that** the deceleration (-ȧ1/-ȧ2) of the emergency braking process is prescribed depending on the selectable driving mode.

3. Method according to either of the preceding claims, **characterized in that** the deceleration (-ȧ1/-ȧ2) is increased as the emergency distance (Eₙₒₜ) decreases.

4. Method according to one of the preceding claims, **characterized in that** a driver profile of a driver of the motor vehicle (1) is ascertained in the driver mode and is taken into consideration when determining the emergency distance (Eₙₒₜ).

5. Method according to one of the preceding claims, **characterized in that** the emergency distance (Eₙₒₜ) and/or emergency deceleration (-ȧ1/-ȧ2) are/is optimized by a machine learning method.

6. Method according to Claim 5, **characterized in that** training data, which includes driving-dynamics data relating to the motor vehicle (1) and/or data relating to the environment of the motor vehicle (1), is used for the machine learning method.

7. Device for operating a motor vehicle (1), in particular a motorcycle or motor car, wherein the motor vehicle (1) has at least one actuable brake system (2) and also a distance control system (7) and an emergency brake system (11), both of which are designed to actuate the brake system (2) in an automated manner, wherein the device is designed as a controller (12), **characterized in that** the controller (12) is specifically configured to execute the method according to one of Claims 1 to 6 when used as intended.

8. Motor vehicle (1) having a device according to Claim 7.

## Revendications

1. Procédé pour faire fonctionner un véhicule à moteur (1), une vitesse du véhicule à moteur (1) étant réglée par un système de régulation d'écart (7) en fonction d'une distance de consigne (Eₛₒₗₗ) du véhicule à moteur (1) par rapport à un usager de la circulation (9) circulant à l'avant, la vitesse, en vue de respecter la distance de consigne (Eₛₒₗₗ), étant réduite par une opération de freinage réalisée par le système de régulation d'écart (7) dans le cas où la distance devient inférieure à la distance de consigne (Eₛₒₗₗ), la vitesse étant réduite par une opération de freinage d'urgence par un système de freinage d'urgence (11) en vue de respecter une distance d'urgence (Eₙₒₜ) prédéfinie par rapport à l'usager de la circulation (9) circulant à l'avant, l'opération de freinage d'urgence provoquant un ralentissement (-a1/-a2) du véhicule à moteur (1) plus important que l'opération de freinage, la distance d'urgence (Eₙₒₜ) étant prédéfinie en fonction d'un mode de conduite pouvant être sélectionné par le conducteur du véhicule à moteur (1), au moins deux modes de conduite étant présentés pour sélection au conducteur du véhicule à moteur (1), à savoir un mode de conduite défensif avec une première distance d'urgence (Eₙₒₜ₁) et un mode de conduite offensif avec une deuxième distance d'urgence (Eₙₒₜ₂), la deuxième distance d'urgence (Eₙₒₜ₂) étant plus petite que la première, **caractérisé en ce que** le mode de conduite défensif est réglé lorsque le système de régulation d'écart est activé et le mode de conduite offensif lorsque le système de régulation d'écart est désactivé.

2. Procédé selon la revendication 1, **caractérisé en ce que** le ralentissement (-a1/-a2) de l'opération de freinage d'urgence est prédéfini en fonction du mode de conduite pouvant être sélectionné.

3. Procédé selon l'une des revendications précédentes, **caractérisé en ce que** le ralentissement (-a1/-a2) est augmenté à mesure que la distance d'urgence (Eₙₒₜ) diminue.

4. Procédé selon l'une des revendications précédentes, **caractérisé en ce qu'**un profil de conducteur d'un conducteur du véhicule à moteur (1) est déterminé dans le fonctionnement avec conducteur et pris en compte lors de la détermination de la distance d'urgence (Eₙₒₜ).

5. Procédé selon l'une des revendications précédentes, **caractérisé en ce que** la distance d'urgence (Eₙₒₜ) et/ou le ralentissement d'urgence (-a1/-a2) sont optimisés par un procédé d'apprentissage automatique.

6. Procédé selon la revendication 5, **caractérisé en ce que** des données d'entraînement sont utilisées pour le procédé d'apprentissage automatique, lesquelles comprennent notamment des données de dynamique de conduite du véhicule à moteur (1) et/ou des données d'environnement du véhicule à moteur (1).

7. Dispositif pour faire fonctionner un véhicule à moteur (1), notamment une motocyclette ou une automobile, le véhicule à moteur (1) possédant au moins un système de freinage (2) commandable ainsi qu'un système de régulation d'écart (7) et un système de freinage d'urgence (11), lesquels sont tous les deux configurés pour commander le système de freinage (2) de manière automatisée, le dispositif étant réalisé sous la forme d'un contrôleur (12), **caractérisé en ce que** le contrôleur (12) est spécialement conçu pour, dans le cas d'une utilisation conforme à sa destination, mettre en œuvre le procédé selon l'une des revendications 1 à 6.

8. Véhicule à moteur (1) équipé d'un dispositif selon la revendication 7.
